# FASCICULE DE BREVET EUROPEEN

(11) **EP 3 623 277 B1**
(45) Date de publication et mention de la délivrance du brevet: **23.11.2022**
(21) Numéro de dépôt: 19196801.5
(22) Date de dépôt: 11.09.2019
(51) Int. Cl.: B64C 1/10, B64C 1/06, B64C 1/18, B61D 17/10

(54) **ZONE ANTÉRIEURE D'UN AÉRONEF AYANT UNE STRUCTURE SIMPLIFIÉE**
FRONTBEREICH EINES LUFTFAHRZEUGS MIT EINER VEREINFACHTEN STRUKTUR
FRONT AREA OF AN AIRCRAFT WITH A SIMPLIFIED STRUCTURE

(30) Priorité: 13.09.2018 FR 1858256
(43) Date de publication de la demande: 18.03.2020
(73) Titulaire: AIRBUS OPERATIONS (S.A.S.), 31060 Toulouse (FR)
(72) Inventeur: BERNADET, Philippe, 31060 TOULOUSE Cedex 9 (FR)
(74) Mandataire: Gicquel, Olivier Yves Gérard

(56) Documents cités:
- EP-A1- 1 614 625
- WO-A1-2007/122096
- WO-A1-2009/004200
- WO-A2-2010/004172
- WO-A2-2013/045852
- CN-U- 207 292 373
- US-A1- 2007 164 152
- US-A1- 2013 146 709
- US-A1- 2017 247 101

## Description

L'invention concerne un plancher d'une zone antérieure d'un aéronef, l'invention s'applique en particulier aux aéronefs de transport de passagers, où la zone antérieure accueille un cockpit et une aire de service à l'arrière du cockpit, avec meubles de rangement (connus sous le nom anglais *"galley"*) et toilettes.

Dans toute la description, de façon usuelle, les termes *"direction longitudinale"* ou "*longitudinalement*" font référence à une direction parallèle à l'axe de roulis ou axe X de l'aéronef (cet axe reliant le nez à la queue de l'aéronef), et les termes *"direction transversale"* et *"transversalement'* font référence à une direction parallèle à l'axe de tangage ou axe Y de l'aéronef (cet axe passant par les extrémités des ailes de l'aéronef), les axes X et Y étant orthogonaux entre eux et orthogonaux à l'axe Z ou axe de lacet, qui correspond à la direction de la gravité lorsque l'aéronef est posé sur un sol horizontal.

### [Art antérieur]

Un plancher de zone antérieure d'aéronef comprend usuellement des traverses portées par des cadres du fuselage, des longerons portés par les traverses et des panneaux recouvrant toute la surface définie par le maillage desdites traverses et longerons.

Les traverses constituent donc les poutres maîtresses du plancher. Une traverse est prévue à chaque cadre du fuselage et chaque traverse est directement fixée au cadre à ses deux extrémités, ce qui induit un nombre important d'attaches entre les traverses et les cadres. À proximité des attaches des traverses sur les cadres doivent aussi être prévues les fixations du toit de la case de train d'atterrissage avant qui se trouve en partie sous le cockpit.

Le document EP1614625 divulgue un plancher de zone antérieure d'aéronef comprenant des longerons et sept traverses portées par des cadres, formant la structure primaire. Le document WO2007/122096 divulgue un plancher comprenant rails centraux et longitudinaux et des traverses, aucune de celles-ci n'étant fixée à des cadres.

L'invention vise à proposer une structure de plancher de zone antérieure simplifiée, dans laquelle le nombre de fixations traverses/cadres est réduit.

### [Présentation de l'invention]

Pour ce faire, l'invention propose une zone antérieure d'un aéronef, l'aéronef comprenant un fuselage avec des cadres, la zone antérieure accueillant un cockpit, agencé en partie au-dessus d'une case de train d'atterrissage avant,
et une aire de services, la zone antérieure ayant un plancher comprenant des traverses, des longerons et un ou plusieurs panneaux de sol. Le plancher selon l'invention comprend :
- une traverse principale arrière s'étendant dans le plan d'un cadre situé dans l'aire de services, laquelle traverse principale arrière est fixée audit cadre,
- un longeron principal bâbord et un longeron principal tribord, lesquels longerons principaux ont une extrémité arrière fixée à la traverse principale arrière
- une ou plusieurs traverses secondaires, fixées aux longerons principaux bâbord et tribord, les traverses secondaires n'étant fixées à aucun cadre, et étant portées par les longerons principaux, le plancher ne comportant aucune traverse fixée à un cadre dans le cockpit.
- un ou plusieurs longerons secondaires.

Ainsi, selon l'invention, les poutres maîtresses ne sont pas des traverses, à l'exception de la traverse arrière principale, mais des longerons, en particulier les longerons principaux bâbord et tribord.

Ceci est avantageux à plusieurs titres. En premier lieu, les traverses secondaires n'étant pas fixées à des cadres, le nombre d'attaches traverse/cadre est considérablement réduit.

On notera en second lieu que la dimension du cockpit (et même de la zone antérieure) selon la direction transversale est supérieure à sa dimension selon la direction longitudinale. Les poutres maîtresses (longerons) dans un plancher selon l'invention sont donc plus courtes que celles (traverses) des planchers antérieurs connus. Elles peuvent par conséquent être moins épaisses (et plus légères) pour une même charge de cockpit et d'aire de services à supporter. En d'autres termes, le dimensionnement des poutres maîtresses du plancher est optimisé grâce à l'invention.

Selon une caractéristique possible de l'invention, les longerons principaux bâbord et tribord présentent chacun une extrémité avant fixée à un élément structurel de la case de train d'atterrissage avant, l'élément structurel utilisé étant avantageusement situé à l'avant du cockpit.

Une traverse principale avant fixée à un cadre aurait pu être prévue à l'instar de la traverse principale arrière pour reprendre les efforts des longerons principaux ; mais une telle traverse principale avant aurait ajouté à la masse de l'aéronef et au nombre d'attaches traverses/cadres. L'invention tire profit de la proximité, à l'avant du cockpit, entre le plancher du cockpit et la structure de la case de train d'atterrissage avant, en utilisant un élément structurel de la case au lieu d'une traverse additionnelle pour porter les longerons principaux à leur extrémité avant.

En l'absence d'élément structurel de la case susceptible de reprendre les efforts du plancher selon l'invention à l'extrémité avant du cockpit, un élément structurel additionnel est prévu. Il peut s'agir d'une traverse principale avant, fixée à un cadre, ou d'un élément de liaison entre le plancher selon l'invention et le fond étanche avant du nez de l'aéronef. Un tel aménagement est moins avantageux mais reste possible.

Selon un mode de réalisation possible du plancher de zone antérieure selon l'invention :
- les traverses secondaires ne s'étendent pas sur toute la dimension transversale de la zone antérieure ; par exemple, les traverses secondaires s'étendent uniquement du longeron principal bâbord au longeron principal tribord,
- le ou les panneaux de sol recouvrent une surface limitée transversalement par les longerons principaux bâbord et tribord. Bien entendu, cette surface correspond au moins à une "surface de marche" des membres d'équipage de l'aéronef (zones auxquelles les membres d'équipage ont besoin d'accéder et sur lesquelles ils sont donc amenés à marcher). De préférence, elle s'étend longitudinalement au moins entre deux traverses secondaires.

Dans ce mode réalisation, les traverses secondaires s'étendant uniquement au maximum du longeron principal bâbord au longeron principal tribord, elles ne s'étendent pas jusqu'au fuselage ; de même le ou les panneaux de sol ne s'étendent pas transversalement au-delà (vers le fuselage) des longerons principaux bâbord et tribord. Cet aménagement laisse donc, de chaque côté du cockpit, une bande latérale dépourvue de traverse et de panneau. Dans les aéronefs de l'état de la technique, les nombreuses traverses de la zone antérieure sont autant d'obstacles au passage de systèmes à travers le plancher. La présence ici de deux bandes latérales dépourvues de traverse et de panneau facilite grandement le passage des systèmes.

Selon une caractéristique possible, le plancher de zone antérieure selon l'invention comprend une traverse, dite traverse de renfort, fixée à un cadre de l'aéronef situé dans l'aire de services, à l'avant de la traverse principale arrière. La traverse de renfort est par exemple située à la jonction entre le cockpit et l'aire de service tandis que la traverse principale arrière est située au niveau de l'extrémité arrière de l'aire de service, par exemple à la jonction entre l'aire de services et la cabine passagers. La traverse de renfort peut être fixée au cadre qui précède celui auquel est fixée la traverse principale arrière.

En d'autres termes, dans ce mode de réalisation, le plancher comprend finalement deux traverses fixées à des cadres, situées toutes deux dans l'aire de services, qui est l'endroit de la zone antérieure supportant les charges les plus lourdes. Les autres traverses, situées à l'avant de la traverse de renfort, ne sont pas fixées à des cadres et sont à ce titre qualifiées de traverses secondaires.

De façon analogue, selon une caractéristique possible de l'invention, le plancher de zone antérieure comprend un longeron de renfort bâbord et un longeron de renfort tribord qui, à l'instar des longerons principaux bâbord et tribord, présentent chacun une extrémité arrière fixée à la traverse principale arrière, et une extrémité avant qui, de préférence, est fixée à l'élément structurel de la case de train d'atterrissage avant.

Selon une caractéristique possible de l'invention, l'élément structurel de la case de train d'atterrissage avant auquel sont fixées les extrémités avant des longerons principaux bâbord et tribord, ainsi que, le cas échéant, les extrémités avant des longerons de renfort bâbord et tribord, fait partie d'un pan de toit horizontal de la case de train.

L'invention s'étend à un aéronef équipé d'un plancher de zone antérieure selon l'invention.

D'autres détails et avantages de la présente invention apparaîtront à la lecture de la description suivante, qui se réfère aux dessins schématiques annexés et porte sur des modes de réalisation préférentiels, fournis à titre d'exemples non limitatifs.

### [Brève description des dessins]

- [fig. 1] : la figure 1 est une vue schématique en perspective de dessus et de dos d'un plancher de zone antérieure selon l'invention, dans lequel les panneaux de sol n'ont pas été représentés.
- [fig. 2] : la figure 2 est une vue schématique en perspective de dessus et de face du plancher de la figure 1 monté dans un fuselage d'aéronef et avec ses panneaux de sol.
- [fig. 3] : la figure 3 est une vue schématique de profil d'un aéronef équipé d'une case de train avant avancée (ainsi qualifiée en raison de sa position) et d'un plancher selon l'invention.

### [Description détaillée]

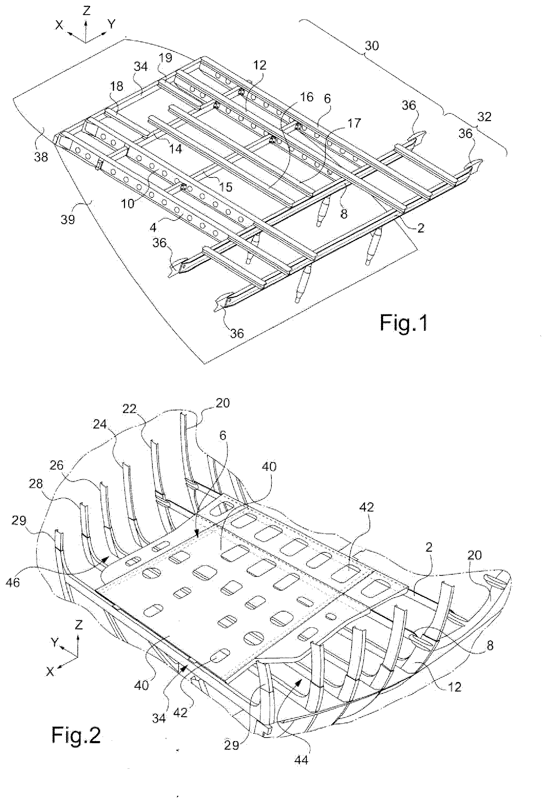

La figure 1 représente le "squelette" d'un plancher d'une zone antérieure d'un aéronef de transport de passagers, laquelle zone antérieure comprend une partie 30 recevant un cockpit et une partie 32 recevant une aire de services avec galley et toilettes (non représentés).

Sous le niveau de ce plancher, on trouve, de l'avant vers l'arrière de l'aéronef, une case de train d'atterrissage avant (appelée simplement "case de train avant" par la suite) et une soute technique qui s'étend sous le cockpit et sous l'aire de services. La soute technique est ouverte en partie supérieure et est pressurisée comme le cockpit.

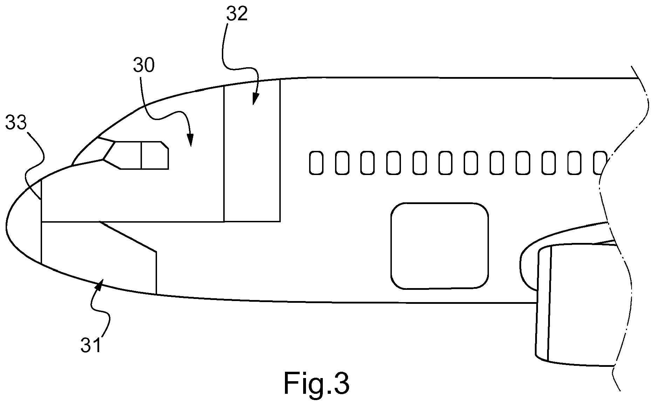

Il existe principalement deux types de case de train avant : des cases de train avant dites "classiques", qui s'étendent essentiellement sous le cockpit, voire même uniquement en partie centrale ou arrière du cockpit, de sorte qu'il existe un espace pressurisé entre la case de train avant et le fond étanche du nez de l'aéronef ; et des cases de train avant dites "avancées" telle celle illustrée sur la figure 3, qui s'étendent jusqu'au fond étanche 33 du nez de l'aéronef. La case de train avant 31 dont on aperçoit le toit sur les figures 1 et 2 est une case "avancée". L'invention s'applique aux aéronefs dotés d'une case de train avancée comme aux aéronefs dotés d'une case de train classique. Mais elle est plus intéressante dans le cas d'une case avancée pour lequel l'absence d'espace libre (pressurisé) entre le fond étanche et la case de train complique la remontée des systèmes vers le cockpit.

Le toit de la case de train avant (avancée) que l'on aperçoit sur la figure 1, comporte un pan horizontal 38 et un pan incliné 39.

Le plancher de la zone antérieure illustré sur les figures 1 et 2 comprend une traverse principale arrière 2 fixée sur et portée par un cadre 20 du fuselage de l'aéronef qui est située dans l'aire de services. La fixation de la traverse principale arrière 2 sur le cadre 20 peut être réalisée à l'aide d'attaches 36 comme dans les planchers antérieurs connus.

Le plancher de zone antérieure selon l'invention illustré sur les figures 1 et 2 comprend également un longeron principal bâbord 4 et un longeron principal tribord 6 dont les extrémités arrière sont fixées sur et portées par la traverse principale arrière 2, et dont les extrémités avant sont fixées sur et portées par un élément structurel 34 faisant partie du pan de toit horizontal 38 de la case de train avant.

À noter que le toit de la case de train avant est dimensionné de façon à pouvoir résister à une importante différence de pressions puisqu'il est exposé d'un côté (au-dessus de la case) à la pression qui règne dans le cockpit et de l'autre côté à la pression extérieure à l'aéronef. Le toit de la case comprend donc des éléments structurels aptes à reprendre des efforts importants, tels la poutre 34 en partie arrière du pan de toit horizontal 38. L'invention exploite ici avantageusement cette caractéristique.

Le plancher de zone antérieure selon l'invention illustré sur les figures 1 et 2 comprend également une traverse de renfort 8, ainsi qu'un longeron de renfort bâbord 10 et un longeron de renfort tribord 12.

La traverse de renfort 8 est fixée à un cadre 22 du fuselage. Le cadre 22 est celui qui précède le cadre 20, c'est-à-dire celui qui est situé immédiatement à l'avant du cadre 20 auquel est fixée la traverse principale arrière 2. Les longerons de renfort 10 et 12 sont fixés de la même façon que les longerons principaux 4 et 6, c'est-à-dire qu'ils sont fixés à la traverse principale arrière 2 par leur extrémité arrière et à l'élément structurel 34 de la case de train avant par leur extrémité avant.

À noter que les longerons principaux bâbord 4 et tribord 6, ainsi que les longerons de renfort 10 et 12, sont également portés par la traverse de renfort 8.

Le plancher de zone antérieure selon l'invention illustré sur les figures 1 et 2 comprend de plus deux traverses secondaires 14, 15 qui s'étendent uniquement du longeron principal bâbord 4 au longeron principal tribord 6. Ces traverses secondaires sont fixées sur et portées par les longerons principaux 4 et 6 et les longerons de renfort 10 et 12. Le plancher pourrait comprendre d'autres traverses secondaires ou au contraire une seule traverse secondaire.

Le plancher de zone antérieure selon l'invention illustré sur les figures 1 et 2 comprend de plus des longerons secondaires 16, 17, 18, 19. Les longerons secondaires 16, 17 s'étendent de la traverse de renfort 8 à la traverse secondaire 14, auxquelles ils sont fixés. Les longerons secondaires 18, 19 s'étendent de la traverse secondaire 14 à l'élément structurel 34 de la case de train avant, auxquels ils sont fixés.

Le réseau des traverses et longerons secondaires n'est pas limité à celui illustré sur les figures annexées. La répartition des traverses et longerons secondaires peut varier et le positionnement des divers longerons et traverses secondaires est à déterminer en fonction des charges mécaniques que doit supporter le plancher. À titre d'exemple, les sièges pilote et co-pilote ayant une embase, il est préférable de positionner les croisements des traverses et longerons secondaires au droit des fixations de ces embases pour des raisons d'efficacité structurale. Au-delà de cette logique, des traverses et/ou longerons secondaires peuvent être ajoutés si le maillage est trop grand pour assurer la rigidité des zones de marche du plancher par exemple.

Le plancher de zone antérieure selon l'invention comprend enfin des panneaux de sol. En variante, un seul panneau de sol 40 est prévu couvrant toute la surface de marche de l'équipage, cette surface comprenant la totalité de l'aire de service et une partie seulement du cockpit. Dans l'exemple illustré, ce panneau (unique) est ajouré, des trous 42 étant prévus par endroits pour réduire la masse du plancher tout en assurant la tenue des charges mécaniques globales que subit le plancher. Les trous peuvent être bouchés par des plaques plus légères afin d'assurer la pose du revêtement de sol (de type moquette) et tenir la charge de la marche de l'équipage.

Comme on peut le voir sur la figure 2, les cadres 24, 26, 28, qui précèdent le cadre 22 auquel est fixée la traverse de renfort 8, ne portent aucune traverse. Aucune traverse ne vient encombrer l'espace 44 (bande latérale) s'étendant transversalement entre le longeron principal bâbord 4 et le fuselage, de même que l'espace 46 (bande latérale) s'étendant transversalement entre le longeron principal tribord 6 et le fuselage. Ces deux bandes latérales ne sont pas des zones de marche de l'équipage mais des zones recevant essentiellement des outils de navigation ou autres équipements, voire des zones perdues inutilisées à l'étage du cockpit. En conséquence de quoi, les bandes latérales 44 et 46 peuvent avantageusement être dépourvues de panneau de sol (comme illustré sur la figure 2). Elles sont donc vierges de tout élément de structure du plancher (ni traverse, ni panneau de sol). En sorte qu'aucun obstacle ne s'oppose au passage vertical des systèmes entre le cockpit et la soute technique au niveau desdits bandes latérales 44 et 46.

L'invention s'étend à toute variante accessible à l'homme du métier c'est-à-dire entrant dans le cadre délimité par les revendications annexées.

## Revendications

1. Zone antérieure d'aéronef comprenant un fuselage avec des cadres (20-29), la zone antérieure comprenant une partie (30) accueillant un cockpit, agencé en partie au-dessus d'une case de train d'atterrissage avant, et une partie (32) recevant une aire de services, la zone antérieure ayant un plancher comprenant des traverses, des longerons et un ou plusieurs panneaux de sol où le plancher comprend :
- une traverse principale arrière (2) s'étendant dans le plan d'un cadre (20) situé dans l'aire de services (32), laquelle traverse principale arrière (2) est fixée audit cadre (20),
- un longeron principal bâbord (4) et un longeron principal tribord (6), lesquels longerons principaux (4, 6) ont une extrémité arrière fixée à la traverse principale arrière (2),
- un ou plusieurs longerons secondaires (16, 17),
**caractérisé en ce que** le plancher comprend:
- une ou plusieurs traverses secondaires (14, 15), fixées aux longerons principaux bâbord et tribord (4, 6), les traverses secondaires (14, 15) n'étant fixées à aucun cadre, et étant portées par les longerons principaux, le plancher ne comportant aucune traverse fixée à un cadre dans la partie (30) accueillant le cockpit.

2. Zone antérieure d'aéronef selon la revendication 1, **caractérisé en ce que** les longerons principaux bâbord et tribord (4, 6) présentent chacun une extrémité avant fixée à un élément structurel (34) de la case de train d'atterrissage avant.

3. Zone antérieure d'aéronef selon la revendication 2, **caractérisé en ce que** l'élément structurel (34) de la case de train d'atterrissage avant fait partie d'un pan de toit horizontal (38) de la case de train.

4. Zone antérieure d'aéronef selon l'une des revendications 1 à 3, **caractérisé en ce que** :
- les traverses secondaires (14, 15) s'étendent uniquement du longeron principal bâbord (4) au longeron principal tribord (6),
- le ou les panneaux de sol (40, 42) recouvrent une surface limitée transversalement par les longerons principaux bâbord et tribord (4, 6) de sorte qu'il reste deux bandes latérales (44, 46) dépourvues de traverse et de panneau de sol.

5. Zone antérieure d'aéronef selon l'une des revendications 1 à 4, **caractérisé en ce qu'**elle comprend une traverse de renfort (8) fixée à un cadre (22) situé dans l'aire de services, à l'avant de la traverse principale arrière (2).

6. Zone antérieure d'aéronef selon l'une des revendications 1 à 5, **caractérisé en ce qu'**elle comprend un longeron de renfort bâbord (10) et un longeron de renfort tribord (12) qui présentent chacun une extrémité arrière fixée à la traverse principale arrière (2).

7. Zone antérieure d'aéronef selon les revendications 2 et 6, **caractérisé en ce que** le longeron de renfort bâbord (10) et le longeron de renfort tribord (12) présentent chacun une extrémité avant fixée à l'élément structurel (34) de la case de train d'atterrissage avant.

8. Zone antérieure d'aéronef selon l'une des revendications 1 à 7, **caractérisé en ce que** les longerons secondaires (16, 17) ne s'étendent pas sur la totalité de la dimension longitudinale de la zone antérieure.

9. Aéronef **caractérisé en ce qu'**il comprend une zone antérieure selon l'une des revendications précédentes.

## Patentansprüche

1. Frontbereich eines Luftfahrzeugs umfassend einen Rumpf mit Rahmen (20-29), wobei der Frontbereich einen Abschnitt (30), der ein Cockpit aufnimmt, das teilweise über einem vorderen Fahrwerksschacht angeordnet ist, und einen Abschnitt (32) umfasst, der einen Servicebereich aufnimmt, wobei der Frontbereich einen Boden umfasst, der Querträger, Längsträger und eine oder mehrere Bodenplatten umfasst, wobei der Boden Folgendes umfasst:
- einen hinteren Hauptquerträger (2), der sich in der Ebene eines Rahmens (20) erstreckt, der sich in dem Servicebereich (32) befindet, wobei der Hauptquerträger (2) an dem Rahmen (20) befestigt ist,
- einen Backbord-Hauptlängsträger (4) und einen Steuerbord-Hauptlängsträger (6), wobei die Hauptlängsträger (4, 6) ein hinteres Ende aufweisen, das am hinteren Hauptquerträger (2) befestigt ist,
- einen oder mehrere Sekundärlängsträger (16, 17),
**dadurch gekennzeichnet, dass** der Boden Folgendes umfasst:
- einen oder mehrere Sekundärquerträger (14, 15), die an den Backbord- und Steuerbord-Hauptlängsträgern (4, 6) befestigt sind, wobei die Sekundärquerträger (14, 15) an keinem Rahmen befestigt sind und von der Hauptlängsträgern getragen werden, wobei der Boden keinen Querträger aufweist, der an einem Rahmen in dem Abschnitt (30) befestigt ist, der das Cockpit aufnimmt.

2. Frontbereich eines Luftfahrzeugs nach Anspruch 1, **dadurch gekennzeichnet, dass** die Backbord- und Steuerbord-Hauptlängsträger (4, 6) jeweils ein vorderes Ende aufweisen, das an einem Strukturelement (34) des vorderen Fahrwerksschachts befestigt ist.

3. Frontbereich eines Luftfahrzeugs nach Anspruch 2, **dadurch gekennzeichnet, dass** das Strukturelement (34) des vorderen Fahrwerksschachts zu einem horizontalen Dachabschnitt (38) des Fahrwerksschachts gehört.

4. Frontbereich eines Luftfahrzeugs nach einem der Ansprüche 1 bis 3, **dadurch gekennzeichnet, dass**:
- sich die Sekundärquerträger (14, 15) nur vom Backbord-Hauptlängsträger (4) zum Steuerbord-Hauptlängsträger (6) erstrecken,
- die Bodenplatte(n) (40, 42) eine Fläche abdecken, die in Querrichtung von den Backbord- und Steuerbord-Hauptlängsträgern (4, 6) begrenzt werden, so dass zwei seitliche Streifen (44, 46) ohne Querträger und Bodenplatte bleiben.

5. Frontbereich eines Luftfahrzeugs nach einem der Ansprüche 1 bis 4, **dadurch gekennzeichnet, dass** er einen Verstärkungsquerträger (8) umfasst, der an einem Rahmen (22) befestigt ist, der sich in dem Servicebereich vor dem hinteren Hauptquerträger (2) befindet.

6. Frontbereich eines Luftfahrzeugs nach einem der Ansprüche 1 bis 5, **dadurch gekennzeichnet, dass** er einen Backbord-Verstärkungslängsträger (10) und einen Steuerbord-Verstärkungslängsträger (12) umfasst, die jeweils ein hinteres Ende aufweisen, das am hinteren Hauptquerträger (2) befestigt ist.

7. Frontbereich eines Luftfahrzeugs nach den Ansprüchen 2 und 6, **dadurch gekennzeichnet, dass** der Backbord-Verstärkungslängsträger (10) und der Steuerbord-Verstärkungslängsträger (12) jeweils ein vorderes Ende aufweisen, das am Strukturelement (34) des vorderen Fahrwerksschachts befestigt ist.

8. Frontbereich nach einem der Ansprüche 1 bis 7, **dadurch gekennzeichnet, dass** sich die Sekundärlängsträger (16, 17) nicht über die gesamte Längsabmessung des Frontbereichs erstrecken.

9. Luftfahrzeug, **dadurch gekennzeichnet, dass** es einen Frontbereich nach einem der vorhergehenden Ansprüche umfasst.

## Claims

1. Anterior zone of an aircraft comprising a fuselage with frames (20-29), the anterior zone comprising a part (30) accommodating a cockpit, arranged partly above a front landing gear compartment, and a part (32) receiving a service area, the anterior zone having a floor comprising crossbeams, spars and one or more floor panels, in which the floor comprises:
- a rear main crossbeam (2) extending in the plane of a frame (20) situated in the service area (32), which rear main crossbeam (2) is fixed to said frame (20),
- a port main spar (4) and a starboard main spar (6), which main spars (4, 6) have a rear end fixed to the rear main crossbeam (2),
- one or more secondary spars (16, 17),
**characterized in that** the floor comprises:
- one or more secondary crossbeams (14, 15), fixed to the port and starboard main spars (4, 6), the secondary crossbeams (14, 15) not being fixed to any frame, and being borne by the main spars, the floor comprising no crossbeam fixed to a frame in the part (30) accommodating the cockpit.

2. Anterior zone of an aircraft according to Claim 1, **characterized in that** the port and starboard main spars (4, 6) each have a front end fixed to a structural element (34) of the front landing gear compartment.

3. Anterior zone of an aircraft according to Claim 2, **characterized in that** the structural element (34) of the front landing gear compartment forms part of a horizontal section of roof (38) of the gear compartment.

4. Anterior zone of an aircraft according to one of Claims 1 to 3, **characterized in that**
- the secondary crossbeams (14, 15) extend only from the port main spar (4) to the starboard main spar (6),
- the floor panel or panels (40, 42) cover a surface delimited transversely by the port and starboard main spars (4, 6) such that there remain two lateral bands (44, 46) without crossbeam and floor panel.

5. Anterior zone of an aircraft according to one of Claims 1 to 4, **characterized in that** it comprises a reinforcing crossbeam (8) fixed to a frame (22) situated in the service area, in front of the rear main crossbeam (2) .

6. Anterior zone of an aircraft according to one of Claims 1 to 5, **characterized in that** it comprises a port reinforcing spar (10) and a starboard reinforcing spar (12) which each have a rear end fixed to the rear main crossbeam (2).

7. Anterior zone of an aircraft according to one of Claims 2 and 6, **characterized in that** the port reinforcing spar (10) and the starboard reinforcing spar (12) each have a front end fixed to the structural element (34) of the front landing gear compartment.

8. Anterior zone of an aircraft according to one of Claims 1 to 7 **characterized in that** the secondary spars (16, 17) do not extend over all the longitudinal dimension of the anterior zone.

9. Aircraft, **characterized in that** it comprises an anterior zone according to one of the preceding claims.
